# EUROPÄISCHE PATENTANMELDUNG

(11) **EP 0 855 143 A2**
(43) Veröffentlichungstag der Anmeldung: **29.07.1998**
(21) Anmeldenummer: 97121989.4
(22) Anmeldetag: 12.12.1997
(51) Int. Cl.: A23N 7/02

(54) **Schälvorrichtung zum kontinuierlichen Schälen von knollenartigem Gemüse, Kartoffeln, Obst oder ähnlichem**

(30) Priorität: 13.01.1997 DE 19700837
(71) Anmelder: Carl Friedrich Tenge-Rietberg Metallverarbeitung, 33758 Schloss Holte-Stukenbrock (DE)
(72) Erfinder: Krüger, Andreas, 33758 Schloss Holte-Stukenbrock (DE); Langer, Horst, Prof. Dr.-Ing., 33178 Borchen (DE); Hennig, Ansgar, 49324 Melle (DE)
(74) Vertreter: Weber, Joachim, Dr.

(57) **Zusammenfassung**

Die Erfindung bezieht sich auf eine Schälvorrichtung zum kontinuierlichen Schälen von knollenartigem Gemüse, Kartoffeln, Obst oder ähnlichem, mit mehreren, angrenzend zueinander angeordneten, drehbaren Schältellern 1, die mit Schleifmittel oder Messern bestückt sind sowie mit einer oberhalb der Schälteller 1 angeordneten Fördereinrichtung, dadurch gekennzeichnet, daß alle Schälteller 1 in einer Ebene angeordnet sind und daß die Fördereinrichtung ein endloses, umlaufendes Förderelement umfaßt, welches sich im Bereich der Schälteller 1 parallel zu deren Ebene erstreckt und an welchem pendelnd plattenartige Fächerelemente 2 gelagert sind, welche an ihrem unteren Bereich einen geringen Abstand zur Ebene der Schälteller 1 aufweisen.

## Beschreibung

Die Erfindung bezieht sich auf eine Schälvorrichtung zum kontinuierlichen Schälen von knollenartigem Gemüse, Kartoffeln, Obst oder ähnlichem.

Zum maschinellen Schälen von knollenartigem Gemüse, Kartoffeln, Obst oder ähnlichem werden ganz generell vier unterschiedliche Verfahren eingesetzt, nämlich das Laugenschälverfahren, das Dampfschälverfahren, das Karborundschälverfahren und das Messerschälverfahren. Das Laugenschälverfahren und das Dampfschälverfahren sind wirtschaftlich nur bei Vorrichtungen mit sehr hoher Durchsatzleistung anwendbar und erfordern zudem sehr hohe Investitionskosten, so daß diese beiden Verfahren nur durch große Betriebe einsetzbar sind. Aus Umweltgesichtspunkten wird das Laugenschälverfahren nur noch begrenzt eingesetzt, das Dampfschälverfahren ist nicht für alle Produkte verwendbar.

In mittelgroßen und kleineren Betrieben werden aus den oben genannten Gründen meist das Karborundschälverfahren und das Messerschälverfahren angewendet, wobei das Messerschälverfahren aus wirtschaftlichen Gründen eine untergeordnete Rolle einnimmt. Beim Messerschälverfahren werden vorwiegend diskontinuierlich arbeitende Topfschälmaschinen eingesetzt.

Bei den Karborundschälverfahren hat sich eine Vorrichtung mit einem kontinuierlich arbeitenden Rollenschäler durchgesetzt, siehe beispielsweise DE-PS 37 11 847. Derartige Rollenschäler weisen jedoch den Nachteil auf, daß sie erst ab einer Leistung von ca. 1000 kg Rohware / Stunde wirtschaftlich einsetzbar sind.

Bei einem derartigen Rollenschäler wird das zu schälende Gut in der Regel mit Hilfe eines Schneckenförderers entlang mehrere an dem Umfang der Schnecke angeordneter, mit Karborund beschichteter, rotierender Rollen bewegt. Hierdurch wird die Schale des knollenartigen Gemüses, der Kartoffel etc. abgeschliffen.

Zusätzlich zu dem wirtschaftlichen Aspekt ergeben sich bei Rollenschälern eine Reihe von Nachteilen. Zunächst ist die Optimierung der Schälergebnisse durch eine schnelle und einfache Anpassung des Rollenschälers an das zu schälende Gut, beispielsweise durch Änderung der Körnung des Schleifbelages, kaum durchführbar. Ein weiterer Nachteil liegt darin, daß das Schälen von kleinen knollenartigen Gemüse, beispielsweise Kartoffelknollen, sogenannten "Drillingen" nur mit unzureichender Qualität durchführbar ist. Als nachteilig erweist es sich auch, daß die Rollen zur Beschichtung ausgebaut werden müssen, wodurch sich ein relativ hoher Wartungsaufwand ergibt. Zusätzlich ist nachteilig, daß nach der Schälung in einem derartigen Rollenschäler vielfach, insbesondere bei Kartoffeln, noch eine Messerschälung vorgenommen werden muß, um den Anforderungen des Marktes zu genügen. Ein derartiges Nachschälen muß in einer zusätzlichen Messerschälmaschine erfolgen, um die gewünschte Oberflächengüte des geschälten Produktes zu gewährleisten.

Aus der DE 91 06 657 U1 ist eine Schälmaschine für kleine Knollenfrüchte, vornehmlich Kartoffeln vorbekannt. Die Schälmaschine weist Schälteller auf, welche so angeordnet sind, daß sich eine Wanne oder ein Trog ergibt, in dessen Freiraum eine Förderschnecke angeordnet ist. Als nachteilig bei dieser Maschine erweist sich, daß lediglich die mittleren, bodenseitigen Schälteller den eigentlichen Schälvorgang durchführen, während die am Trogrand bzw. Wannenrand angeordneten Schälteller nur zu einem geringen Grade eine Schälwirkung aufweisen. Hierdurch ergibt sich eine niedrige Leistung bzw. Effizienz der Maschine. Hierzu tragen auch die toten Bereiche zwischen den jeweiligen Ebenen der Schälteller und der zum Schälgut-Transport verwendeten Schnecke bei. Zusätzlich ergibt sich ein erhöhter Schälabfall. Da die Förderschnecke eine zylindrische Hüllkurve aufweist, der durch die Schälteller gebildete Trog jedoch polygon ist, weist die Förderschnecke unterschiedliche Abstände zu der Oberfläche der einzelnen Schälteller auf. Hierdurch ergibt sich die Gefahr von Quetschungen des Schälguts, wodurch dieses entweder beschädigt oder entweder zu stark oder zu schwach oder ungleichmäßig geschält wird.

Die DE 26 02 249 C2 beschreibt eine Schälvorrichtung, bei welcher der Schälvorgang mittels rotierender Bürsten erfolgt. Die Bürsten drehen sich gegenläufig zur Förderrichtung eines Transportbandes, welches mit Rippen versehen ist. Eine derartige Schälvorrichtung dient zum Abbürsten der Schalen von dampfgeschälten Kartoffeln. Das Transportband weist einzelne, feststehende Trennwände auf, durch welche die zu schälenden Kartoffeln zwangsläufig fortbewegt werden. Als nachteilig erweist es sich hierbei, daß die Trennwände, bedingt durch die zylindrische Form der Bürsten, ungleiche Abstände zu den Bürsten aufweisen, wodurch ein zuverlässiger und gleichmäßiger Transport der Kartoffeln nicht gewährleistet ist.

Der Erfindung liegt die Aufgabe zugrunde, eine Schälvorrichtung zum kontinuierlichen Schälen, vorzugsweise in kombiniertem Karborund/Messerschälverfahren von knollenartigem Gemüse, Kartoffeln, Obst oder ähnlichem zu schaffen, welche bei einfachem Aufbau und betriebssicherer Handhabbarkeit auch für geringe Durchlaufleistungen auslegbar ist und ein gutes, gleichmäßiges Schälergebnis ohne die Gefahr von Beschädigungen des Schälgutes ermöglicht.

Erfindungsgemäß wird die Aufgabe durch die Merkmale des Hauptanspruchs gelöst, die Unteransprüche zeigen weitere vorteilhafte Ausgestaltungen der Erfindung. Erfindungsgemäß ist somit vorgesehen, daß bei einer Schälvorrichtung, welche mehrere, angrenzend zueinander angeordnete, drehbare Schälteller sowie eine oberhalb der Schälteller angeordnete Fördereinrichtung umfaßt, alle Schälteller in einer Ebene angeordnet sind und daß die Fördereinrichtung ein endloses, umlaufendes Förderelement umfaßt, welches sich im Bereich der Schälteller parallel zu deren Ebene erstreckt und an welchem pendelnd plattenartige Fächerelemente gelagert sind, welche an ihrem unteren Bereich einen geringen Abstand zur Ebene der Schälteller aufweisen.

Die erfindungsgemäße Schälvorrichtung zeichnet sich durch eine Reihe erheblicher Vorteile aus. Da erfindungsgemäß sämtliche Schälteller in einer Ebene angeordnet sind, kann die gesamte Arbeitsbreite der Schälmaschine in gleicher Weise genutzt werden. Es ist ein kombiniertes Karborund/Messerschälverfahren möglich. Es ergeben sich keine toten Ecken oder sonstige Bereiche, in welchen der Schälvorgang ungleichmäßig oder mit geringerer Wirksamkeit erfolgen würde. Die plattenartigen Fächerelemente werden längs des gesamten, ebenen Bereichs der Schälteller bewegt, durch die pendelnde Aufhängung wird in zuverlässiger Weise vermieden, daß das Schälgut gequetscht wird oder durch die Fördereinrichtung in unerwünschter Weise gegen bestimmte Bereiche der Schälteller gepreßt wird. Hierdurch ist es möglich, schälgut unterschiedlichster Sortierungen, beispielsweise auch sogenannte "Drillinge" mit guter Qualität zu schälen. Durch den geringen Abstand des unteren Bereichs der plattenartigen Fächerelemente von der Ebene der Schälteller ergibt sich ein zuverlässiger, gleichmäßiger Transport des Schälgutes, auch sehr kleines Schälgut kann auf diese Weise problemlos über die Schälteller transportiert werden.

Die Unterkante der Fächerelemente verläuft parallel zu der Ebene der Schälteller, wobei der Abstand lediglich einige Millimeter beträgt.

Erfindungsgemäß kann die Fördereinrichtung bevorzugterweise in Form zumindest eines Förderbandes ausgebildet sein, es ist jedoch auch möglich, zwei seitliche, bandartige oder kettenartige umlaufende Förderelemente vorzusehen. An dem Förderband bzw. den seitlichen Förderelementen sind jeweils pendelnd die plattenartigen Fächerelemente aufgehängt. Bei der erfindungsgemäßen Vorrichtung wird somit das Schälgut mittels der plattenartigen Fächerelemente über die horizontale, durch die Schälteller gebildete Ebene bewegt. Es versteht sich, daß die Zwischenräume zwischen den runden Schältellern durch Masken oder Abdeckelemente verschlossen sind, so daß sich eine im wesentlichen ebene Auflagefläche ergibt.

In günstiger Ausgestaltung der Erfindung ist vorgesehen, daß mehrere, in Durchlaufrichtung der Schälvorrichtung hintereinander angeordnete Schälteller einen mit einem gemeinsamen Antrieb versehenen Schälstrang bilden. Durch Anordnung mehrerer Schälstränge nebeneinander kann die erfindungsgemäße Schälvorrichtung somit baukastenartig unterschiedlichen Leistungen angepaßt werden. So ist es beispielsweise möglich, einen Leistungsbereich von 250 bis 1000 kg Rohware / Stunde in einfachster Weise zu realisieren.

Besonders vorteilhaft ist es, wenn jeder Schälstrang an einem Trägergestell gelagert ist, welches aus der Schälvorrichtung entnehmbar, beispielsweise aus dieser schubartig herausziehbar ist. Durch diese Konstruktion wird die Reinigung der Schälvorrichtung ganz erheblich vereinfacht. Weiterhin ist ein freier Zugriff auf die Schälteller möglich, um diese auszutauschen, hinsichtlich ihrer Schälwirkung zu kontrollieren, zu reinigen oder andere Wartungsarbeiten vorzunehmen. Die erfindungsgemäße Schälmaschine erfüllt somit höchste hygienische Anforderungen.

Durch die Möglichkeit, die einzelnen Schälstränge ohne Montagearbeiten und ohne zusätzliches Werkzeug aus der Schälmaschine zu entfernen bzw. wieder einzubauen, kann die Baugruppe sowie der einzelne Schälteller in einfachster Weise gewartet, kontrolliert oder repariert werden. Da jeder Schälstrang einen eigenen Antriebsmotor aufweisen kann, kann die gesamte Komponente leicht ausgetauscht werden. Dies ist insbesondere dann vorteilhaft, wenn die Schälmaschine für unterschiedliches Schälgut umgerüstet werden soll, beispielsweise mit Schältellern anderer Körnung, mit einer anderen Anzahl von Schältellern oder mit einem anderen Antrieb, beispielsweise mit veränderter Leistung oder veränderter Drehzahl der Schälteller.

Durch die beschriebene Konstruktion ist es erfindungsgemäß möglich, die Drehzahl der Schälteller und die Fördergeschwindigkeit der Fördereinrichtung unabhängig voneinander zu wählen und einzustellen. Dies erlaubt eine optimale Anpassung an das zu schälende Gut, insbesondere dessen Verweilzeit im Bereich der einzelnen Schälteller.

Bei der erfindungsgemäßen Schälmaschine können unterschiedlichste Ausgestaltungen von Schältellern verwendet werden, beispielsweise mit Messern oder mit einem Schleifmittel-Belag. Der Schleifmittel-Belag kann auf die Schälteller aufgeklebt werden, beispielsweise mittels eines flüssigen, aushärtbaren Klebers, es ist auch eine Befestigung mittels einer Klebefolie oder einem Klettverschluß möglich, so daß die Schleifmittel bzw. der Schleifmittel-Belag leicht austauschbar sind.

Innerhalb eines Schälstranges ist es weiterhin möglich, unterschiedliche Schälteller, beispielsweise mit Messern und mit Schleifmittel-Belag zu verwenden, so daß sich beim Durchlauf des Schälgutes unterschiedliche Schälvorgänge ergeben können. So ist es beispielsweise möglich, mittels des Schleifmittels zunächst die Oberflächenschicht abzutragen und dann einen Messerschälvorgang anschließen zu lassen, um eine optimale Oberfläche zu erzielen.

Die erfindungsgemäßen Schälteller können Umwerferstege aufweisen, um eine gleichmäßige, abwälzende Bewegung des Schälgutes zu realisieren. Diese Umwerferstege können aus Metall, Gummi oder Kunststoff, vorzugsweise vernetztem Kunststoff gebildet sein.

Insbesondere bei Schältellern, bei welchen der Schleifmittel-Belag, der beispielsweise aus Karborund besteht, mittels beispielsweise eines Klettverschlusses aufgebracht ist, können auch unterschiedliche Körnungen des Schleifmittels über die Länge des Schälstranges eingesetzt werden. Dadurch ist eine einfache und schnelle Anpassung an das jeweilige Schälgut bzw. die erforderliche Schälgüte möglich.

Im folgenden wird die Erfindung anhand von Ausführungsbeispielen in Verbindung mit der Zeichnung beschrieben. Dabei zeigt:
- Fig. 1: eine Seitenansicht, in vereinfachter Darstellung, eines Ausführungsbeispiels der erfindungsgemäßen Schälvorrichtung,
- Fig. 2: eine Draufsicht auf eine abgewandeltes Ausführungsbeispiel der Schälvorrichtung gemäß Fig. 1,
- Fig. 3: eine Seitenansicht, ähnlich Fig. 1, bei welcher die Schälstränge aus der Schälmaschine herausgezogen sind,
- Fig. 4: eine Draufsicht auf eine abgewandelte Ausgestaltungsform in analoger Darstellung der Fig. 3,
- Fig. 5: eine stirnseitige Ansicht auf den Einlaufbereich der erfindungsgemäßen Schälvorrichtung,
- Fig. 6: eine stirnseitige Schnittansicht eines Ausführungsbeispiels der erfindungsgemäßen Schälvorrichtung nach Entfernen der Schälstränge,
- Fig. 7: eine Draufsicht auf ein Ausführungsbeispiel eines Schältellers mit Klettverschlußhalterung,
- Fig. 8: eine Draufsicht auf ein Ausführungsbeispiel eines Umwerfersteges zur Befestigung auf dem in Fig. 7 gezeigten Schälteller,
- Fig. 9: eine Draufsicht auf ein weiteres Ausführungsbeispiel eines erfindungsgemäßen Schältellers mit Umwerfersteg, und
- Fig. 10: eine vereinfachte perspektivische Darstellung des Umwerferstegs gemäß Fig. 9.

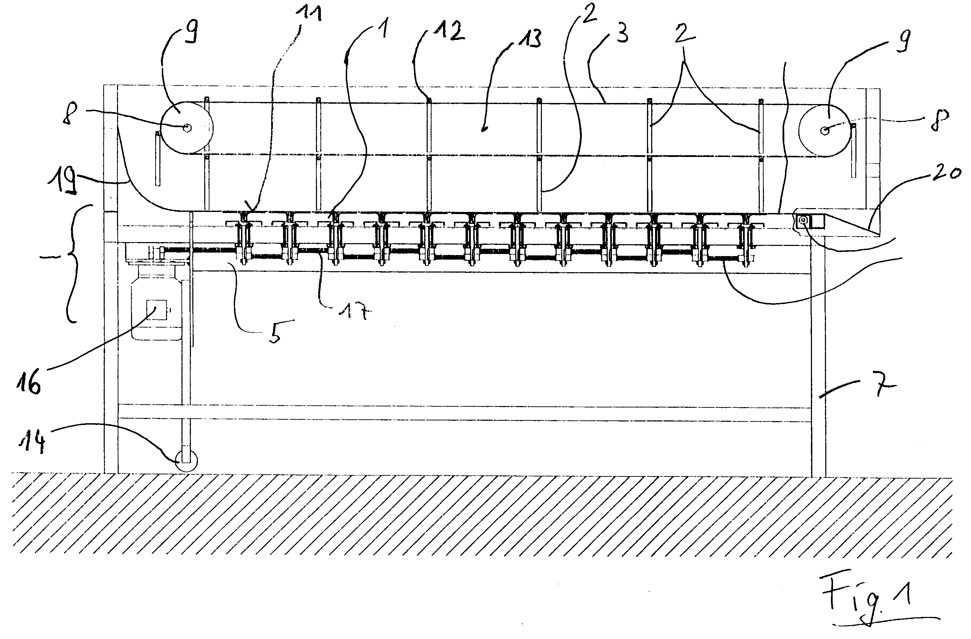

Die Fig. 1 zeigt eine schematische, vereinfachte Seitenansicht der erfindungsgemäßen Schälvorrichtung. Zur Vereinfachung der Darstellung sind seitliche Abdeckwände entnommen worden, so daß der funktionelle Innenbereich der Schälvorrichtung sichtbar ist.

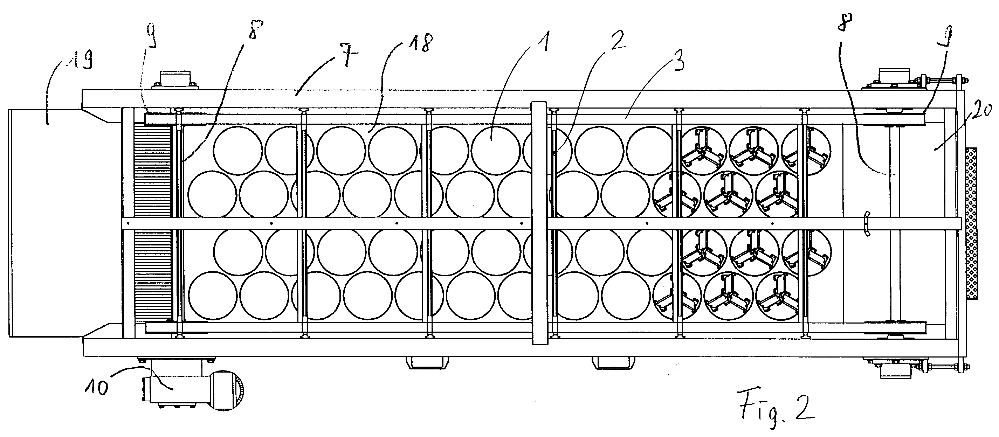

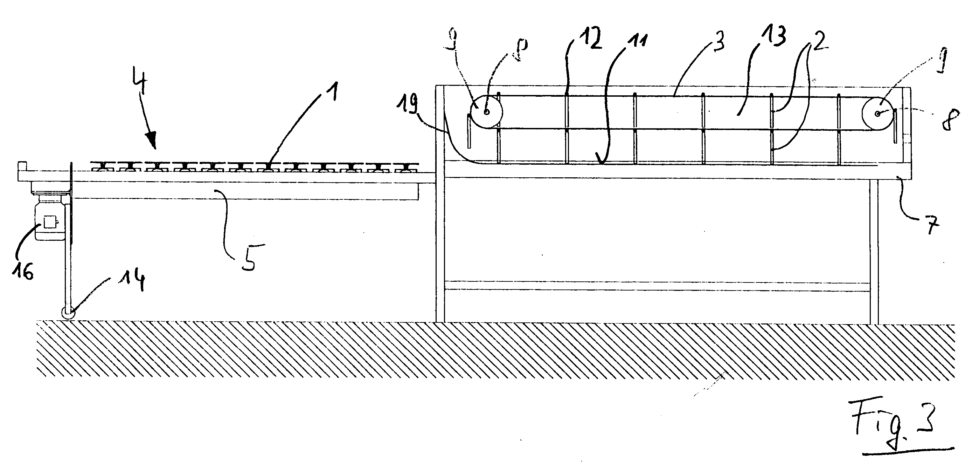

Die Schälvorrichtung umfaßt ein Gestell 7, welches mit Füßen versehen ist und auf einen Hallenboden aufstellbar ist. Wie die Draufsicht der Fig. 2, in welcher ein abgewandeltes Ausführungsbeispiel gezeigt ist, zeigt, sind in dem Gestell 7 zwei drehbare Achsen 8 gelagert, welche seitliche Umlenkrollen 9 tragen. Eine der Achsen 8 ist mittels eines Motors 10 antreibbar. Über die Umlenkrollen 9 sind zwei seitliche Förderbänder bzw. bandartige Elemente 3 geführt, an welchen pendelnd Fächerelemente 2 gelagert sind (siehe insbesondere Fig. 1 und 3). Die Fächerelemente 2 sind mittels Gelenken 12 an den Förderbändern 3 pendelnd aufgehängt und bilden zusammen mit einer Ebene 11, in welcher Schälteller 1 angeordnet sind, Fächer 13.

Die unteren Kanten der rechteckigen Fächerelemente 2 weisen einen sehr geringen Abstand von lediglich einigen Millimetern zu der horizontalen Ebene 11 auf.

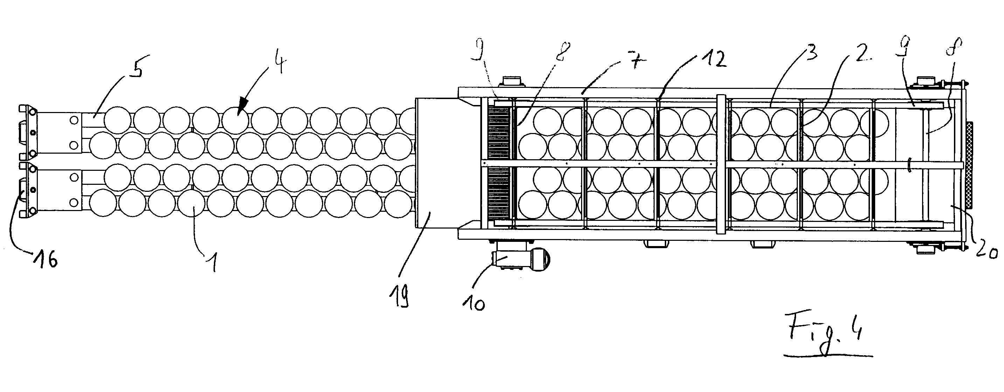

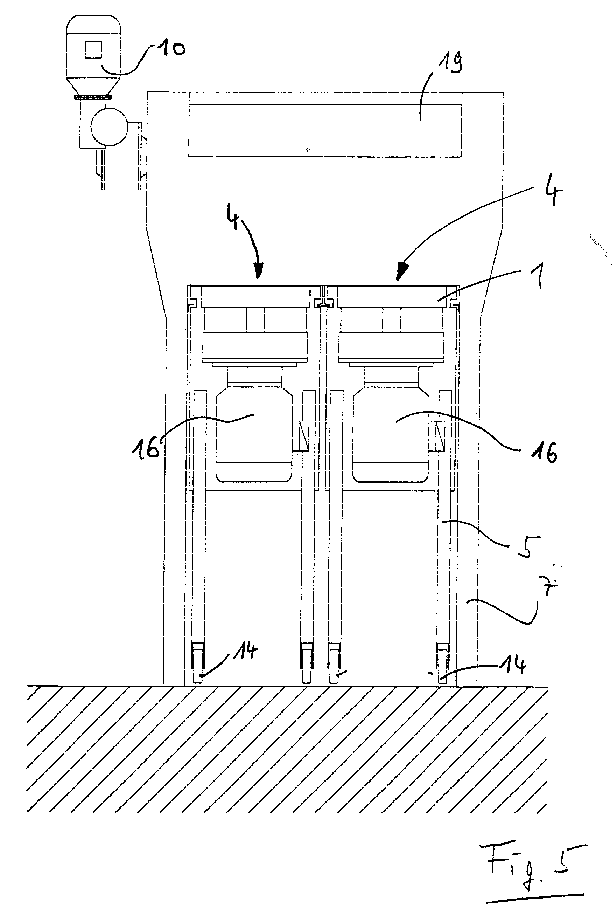

An dem Gestell 7 ist ein Trägergestell 5 gelagert, dessen vorderer Bereich auf Rollen 14 verfahrbar ist und einen Motor 16 trägt. Der hintere Bereich des Trägergestells 5 ist in einer Schubaufnahme 15 gelagert (siehe Fig. 6). Somit ist es möglich, das Trägergestell 5 in einfachster Weise aus dem Gestell 7 der Schälvorrichtung herauszuziehen (siehe Fig. 3 und 4). Hierdurch werden die einzelnen Schälteller 1 frei zugänglich.

Wie insbesondere in Fig. 4 dargestellt, bilden die Schälteller 1 jeweils einen Schälstrang 4. Es werden vorzugsweise zwei zueinander parallele Reihen von Schältellern 1, die um ihre halbe Durchmesserweite versetzt sind, zu einem Schälstrang 4 kombiniert, wie in Fig. 4 dargestellt. Die einzelnen Schälstränge können nur eine einzige Reihe hintereinander angeordneter Schälteller 1 oder mehrere Reihen umfassen. Bei dem in den Figuren gezeigten Ausführungsbeispiel der Schälvorrichtung sind zwei Schälstränge 4 nebeneinander angeordnet, siehe insbesondere Fig. 5.

Der Antrieb der einzelnen Schälteller 1 jedes Schälstrangs 4 mittels des Motors 16 kann beispielsweise mittels Riemen 17 oder Kegelrädern etc. erfolgen. Somit ist ein gleichmäßiger Antrieb sämtlicher Schälteller 1 eines Schälstrangs 4 gewährleistet. Es versteht sich, daß die Drehzahl des Motors 16 und damit auch die Drehzahl der einzelnen Schälteller 1 frei einstellbar ist, insbesondere unabhängig von der Umlaufgeschwindigkeit des Förderbands 3 (mittels des Motors 10).

In der Draufsicht der Fig. 2 ist besonders deutlich, daß der Zwischenraum zwischen den einzelnen Schältellern 1 zur Bildung der Ebene 11 mittels eines Maskenblechs 18 verdeckt ist. Es wird somit bei eingeschobenem Trägergestell 5 und eingesetzten Schältellern 1 eine im wesentlichen ebene Transport- und Bearbeitungsfläche geschaffen.

Die einzelnen Schälteller 1 können in das Trägergestell 5 bzw. in ihre im einzelnen nicht dargestellte Lagerung eingesteckt oder eingelegt sein, so daß ein einfaches Wechseln der Schälteller 1 möglich ist.

Das Maskenblech 18 umfaßt weiterhin einen Einlaufbereich 19 sowie eine Auslaufschräge 20. Somit erfolgt die Förderung des Schälgutes bei der Darstellung gemäß Fig. 1 von links nach rechts.

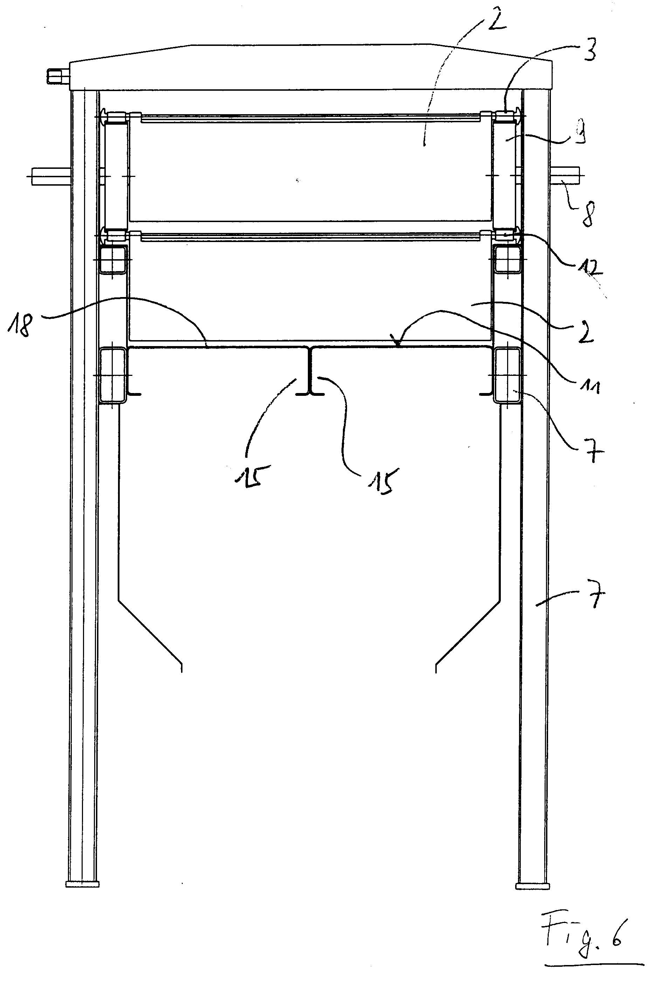

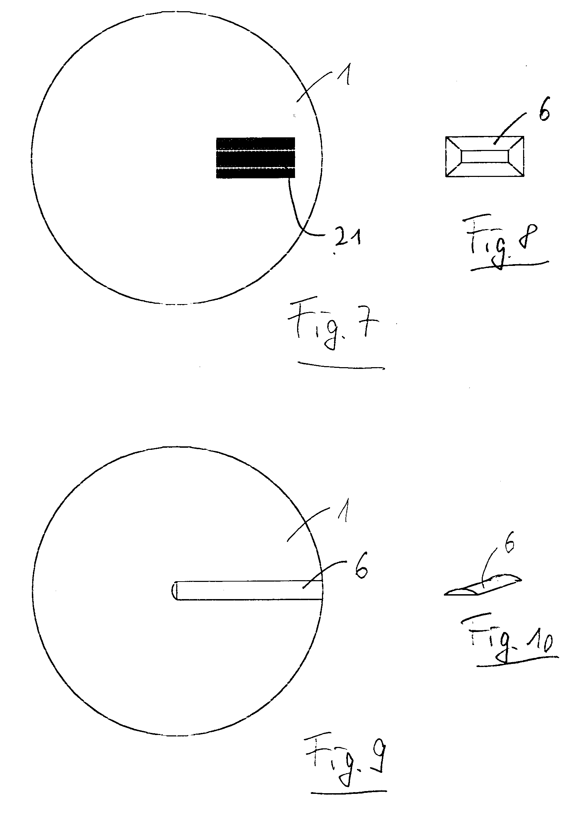

Die Fig. 7 bis 9 zeigen Ausgestaltungen der Oberflächen der Schälteller 1, wobei auf die Darstellung des Schleifmittel-Belages verzichtet wurde. In der Darstellung gemäß Fig. 7 ist ein Klettbereich 21 auf der Oberfläche des Schältellers 1 befestigt, auf welchen der in Fig. 8 gezeigte Umwerfersteg 6 lösbar aufsetzbar ist. Die Fig. 9 zeigt ein Ausführungsbeispiel, bei welchem ein Umwerfersteg 6 aus Kunststoff aufgespritzt oder aufgeklebt ist. Dieser kann beispielsweise auch aus einer Polyurethanmasse bestehen. Die Fig. 10 zeigt eine perspektivische, vereinfachte Darstellung dieses Umwerferstegs. Die Umwerferstege dienen dazu, eine rotierende und dynamische Bewegung des Schälgutes zu gewährleisten.

Die Erfindung ist nicht auf die gezeigten Ausführungsbeispiele beschränkt, vielmehr ergeben sich im Rahmen der Erfindung vielfältige Abwandlungs- und Modifikationsmöglichkeiten.

### Zusammenfassend ist folgendes festzustellen:

Die Erfindung bezieht sich auf eine Schälvorrichtung zum kontinuierlichen Schälen von knollenartigem Gemüse, Kartoffeln, Obst oder ähnlichem, mit mehreren, angrenzend zueinander angeordneten, drehbaren Schältellern 1, die mit Schleifmittel oder Messern bestückt sind sowie mit einer oberhalb der Schälteller 1 angeordneten Fördereinrichtung, dadurch gekennzeichnet, daß alle Schälteller 1 in einer Ebene angeordnet sind und daß die Fördereinrichtung ein endloses, umlaufendes Förderelement umfaßt, welches sich im Bereich der Schälteller 1 parallel zu deren Ebene erstreckt und an welchem pendelnd plattenartige Fächerelemente 2 gelagert sind, welche an ihrem unteren Bereich einen geringen Abstand zur Ebene der Schälteller 1 aufweisen.

## Patentansprüche

1. Schälvorrichtung zum kontinuierlichen Schälen von knollenartigem Gemüse, Kartoffeln, Obst oder ähnlichem, mit mehreren, angrenzend zueinander angeordneten, drehbaren Schältellern (1), die mit Schleifmittel oder Messern bestückt sind sowie mit einer oberhalb der Schälteller (1) angeordneten Fördereinrichtung, dadurch gekennzeichnet, daß alle Schälteller (1) in einer Ebene angeordnet sind und daß die Fördereinrichtung ein endloses, umlaufendes Förderelement umfaßt, welches sich im Bereich der Schälteller (1) parallel zu deren Ebene erstreckt und an welchem pendelnd plattenartige Fächerelemente (2) gelagert sind, welche an ihrem unteren Bereich einen geringen Abstand zur Ebene der Schälteller (1) aufweisen.

2. Schälvorrichtung nach Anspruch 1, dadurch gekennzeichnet, daß der Abstand der Unterkante der Fächerelemente (2) von der Ebene (11) der Schälteller (1) einige Millimeter beträgt.

3. Schälvorrichtung nach einem der Ansprüche 1 oder 2, dadurch gekennzeichnet, daß das Förderelement in Form zumindest eines Förderbandes (3) ausgebildet ist.

4. Schälvorrichtung nach einem der Ansprüche 1 oder 2, dadurch gekennzeichnet, daß das Förderelement zwei seitliche, bandartige, riemenartige oder kettenartige Elemente (3) umfaßt.

5. Schälvorrichtung nach einem der Ansprüche 1 bis 4, dadurch gekennzeichnet, daß mehrere, in Durchlaufrichtung der Schälvorrichtung hintereinander angeordnete Schälteller (1) einen mit einem gemeinsamen Antrieb (16) versehenen Schälstrang (4) bilden.

6. Schälvorrichtung nach Anspruch 5, dadurch gekennzeichnet, daß jeder Schälstrang (4) an einem Trägergestell (5) gelagert ist, welches aus der Schälvorrichtung entnehmbar ist.

7. Schälvorrichtung nach Anspruch 6, dadurch gekennzeichnet, daß das Trägergestell (5) aus der Schälvorrichtung ausziehbar ist.

8. Schälvorrichtung nach einem der Ansprüche 5 bis 7, dadurch gekennzeichnet, daß mehrere Schälstränge (4) nebeneinander angeordnet sind.

9. Schälvorrichtung nach einem der Ansprüche 1 bis 8, dadurch gekennzeichnet, daß die Drehzahl der Schälteller (1) und die Fördergeschwindigkeit der Fördereinrichtung unabhängig voneinander einstellbar sind.

10. Schälvorrichtung nach einem der Ansprüche 1 bis 9, dadurch gekennzeichnet, daß die Schälteller (1) mit Messern versehen sind.

11. Schälvorrichtung nach einem der Ansprüche 1 bis 9, dadurch gekennzeichnet, daß die Schälteller (1) mit Schleifmittel belegt sind.

12. Schälvorrichtung nach Anspruch 11, dadurch gekennzeichnet, daß die Schleifmittel auf die Schälteller (1) mittels eines flüssigen, aushärtbaren Klebers aufgebracht sind.

13. Schälvorrichtung mach Anspruch 12, dadurch gekennzeichnet, daß die Schleifmittel auf die Schälteller (1) mittels einer Klebefolie aufgebracht sind.

14. Schälvorrichtung nach Anspruch 11, dadurch gekennzeichnet, daß die Schleifmittel auf die Schälteller (1) mittels Klettverschluß lösbar aufgebracht sind.

15. Schälvorrichtung nach einem der Ansprüche 1 bis 14, dadurch gekennzeichnet, daß die Schälteller (1) eines Schälstrangs (4) wahlweise aus mit Messern bestückten Schältellern (1) und aus mit Schleifmittel belegten Schältellern (1) bestehen.

16. Schälvorrichtung nach einem der Ansprüche 1 bis 15, dadurch gekennzeichnet, daß die mit Messern bestückten oder mit Schleifmittel belegten Schälteller (1) einen oder mehrere Umwerferstege (6) aufweisen.

17. Schälvorrichtung nach Anspruch 16, dadurch gekennzeichnet, daß die Umwerferstege (6) aus Metall, Gummi oder Kunststoff gebildet sind.
